# FASCICULE DE BREVET EUROPEEN

(11) **EP 0 897 934 B1**
(45) Date de publication et mention de la délivrance du brevet: **21.12.2005**
(21) Numéro de dépôt: 98202762.5
(22) Date de dépôt: 18.08.1998
(51) Int. Cl.: C08F 10/02, C08L 23/08, C08L 23/04

(54) **Procédé de fabrication d'une composition de polymères d'éthylène**
Verfahren zur Herstellung einer Ethylenpolymer-Zusammensetzung
Process for the preparation of an ethylen polymer composition

(30) Priorité: 20.08.1997 BE 9700694
(43) Date de publication de la demande: 24.02.1999
(60) Demande divisionnaire: 03017692.9
(73) Titulaire: Innovene Manufacturing Belgium NV, 2040 Antwerpen (BE)
(72) Inventeur: Promel, Michel, 1120 Bruxelles (BE); Moens, Bruno, 1040 Bruxelles (BE)
(74) Mandataire: Smith, Julian Philip Howard

(56) Documents cités:
- EP-A- 0 057 352
- EP-A- 0 503 791
- EP-A- 0 603 935
- EP-A- 0 783 022
- DE-A- 19 526 340

## Description

La présente invention concerne un procédé de fabrication d'une composition de polymères d'éthylène comprenant un homopolymère et un copolymère de l'éthylène, mettant en oeuvre plusieurs réacteurs de polymérisation connectés en série.

Dans la demande de brevet EP-A-0 603 935 (SOLVAY), on décrit un procédé de préparation d'une composition de polymères d'éthylène comprenant un polymère d'éthylène d'indice de fluidité élevé (MI₂ de 5 à 1000 g/10 min) et un polymère d'éthylène d'indice de fluidité faible (MI₅ de 0,01 à 2 g/10 min) dans au moins deux réacteurs disposés en série, le rapport pondéral de ces polymères étant égal à (30 à 70):(70 à 30). Cette demande de brevet divulgue plus spécifiquement une composition, préparée en suspension dans de l'hexane, comprenant un homopolymère de l'éthylène ayant un MI₂ de 168 g/10 min et un copolymère de l'éthylène et du butène ayant un MI₅ de 0,21 g/10 min.

Dans la demande de brevet EP-A-0 580 930, on décrit un procédé de préparation d'une composition de polymères d'éthylène dans deux réacteurs boucles en phase liquide dans lequel, dans un premier réacteur on introduit de l'éthylène et une alpha-oléfine, telle que de l'hexène de façon à préparer un copolymère de l'éthylène et de l'hexène ayant un indice de fluidité HLMI variant de 0,01 à 5 g/10 min, puis le milieu issu du premier réacteur est introduit dans un deuxième réacteur alimenté en éthylène, de façon à obtenir un polymère d'éthylène ayant un HLMI supérieur à 5 g/10 min. Comme le milieu issu du premier réacteur comprend encore de l'hexène non polymérisé, le polymère formé dans le deuxième réacteur est également un copolymère de l'éthylène et de l'hexène.

Les compositions issues de ces procédés présentent en général des propriétés de mise en oeuvre et mécaniques qui les rendent aptes à être utilisées pour la fabrication d'objets façonnés divers.

La présente invention a pour but de procurer un procédé de fabrication de compositions de polymères d'éthylène présentant un meilleur compromis entre les propriétés de mise en oeuvre et les propriétés mécaniques par rapport aux compositions obtenues par les procédés connus de l'état de la technique.

L'invention concerne dès lors un procédé de fabrication d'une composition de polymères d'éthylène, comprenant de 30 à 70 % en poids par rapport au poids total de la composition d'un homopolymère de l'éthylène (A) ayant un indice de fluidité MI₂ de 5 à 1000 g/10 min et une masse volumique standard MVS d'au moins 970 kg/m³ et de 30 à 70 % en poids par rapport au poids total de la composition d'un copolymère de l'éthylène et de l'hexène (B) ayant un indice de fluidité MI₅ de 0,01 à 2 g/10 min et une masse volumique standard MVS de 910 à 940 kg/m³, dans au moins deux réacteurs de polymérisation connectés en série, selon lequel :
- dans un premier réacteur, on polymérise de l'éthylène en suspension dans un milieu comprenant un diluant, de l'hydrogène, un catalyseur à base d'un métal de transition et un cocatalyseur, de façon à former de 30 à 70 % en poids par rapport au poids total de la composition de l'homopolymère de l'éthylène (A),
- on soutire dudit réacteur ledit milieu comprenant en outre l'homopolymère (A) et on le soumet à une détente de façon à dégazer au moins une partie de l'hydrogène, puis,
- on introduit dans un réacteur ultérieur ledit milieu au moins partiellement dégazé comprenant l'homopolymère (A) ainsi que de l'éthylène et du 1-hexène et, éventuellement, au moins une autre α-oléfine et on y effectue la polymérisation en suspension pour former de 30 à 70 % en poids par rapport au poids total de la composition du copolymère de l'éthylène et de l'hexène (B).

On entend désigner par homopolymère de l'éthylène (A), un polymère d'éthylène constitué essentiellement d'unités monomères dérivées d'éthylène et substantiellement exempt d'unités monomères dérivées d'autres oléfines. On entend désigner par copolymère de l'éthylène et de l'hexène (B), un copolymère comprenant des unités monomères dérivées de l'éthylène et des unités monomères dérivées du 1-hexène et, éventuellement, d'au moins une autre α-oléfine. L'autre α-oléfine peut être sélectionnée parmi les monomères oléfiniquement insaturés comprenant de 3 à 8 atomes de carbone (à l'exclusion du 1-hexène) telles que par exemple le propylène, le 1-butène, le 1-pentène, le 3-méthyl-1-butène, les 3- et 4-méthyl-1-pentènes et le 1-octène. Des α-oléfines préférées sont le propylène, le 1-butène et le 1-octène et plus particulièrement encore le 1-butène. Le copolymère (B) comprend en général au moins 90 %, en particulier au moins 94 %, en poids d'unités monomères dérivées de l'éthylène. Il comprend de préférence au moins 96 % en poids d'unités monomères dérivées de l'éthylène. La teneur en unités monomères dérivées du 1-hexène dans le copolymère (B), appelée ci-après teneur en hexène, est généralement d'au moins 0,4 % en poids, en particulier d'au moins 0,6 % en poids, les valeurs d'au moins 1 % en poids étant favorables. La teneur en hexène du copolymère (B) est habituellement d'au plus 10 % en poids, de préférence d'au plus 6 % en poids. Particulièrement préférée est une teneur en hexène qui ne dépasse pas 4 % en poids. Aux fins de la présente invention, la teneur en hexène du copolymère (B) est mesurée par RMN¹³C selon la méthode décrite dans J.C.RANDALL, JMS-REV.MACROMOL.CHEM. PHYS., C29(2&3), p.201-317 (1989), c'est-à-dire que la teneur en unités dérivées de l'hexène est calculée à partir des mesures des intégrales des raies caractéristiques de l'hexène (23,4; 34,9 et 38,1 ppm) par rapport à l'intégrale de la raie caractéristique des unités dérivées de l'éthylène (30 ppm). Particulièrement préféré est un copolymère (B) constitué essentiellement d'unités monomères dérivées de l'éthylène et du 1-hexène.

On entend désigner par indice de fluidité MI₂, respectivement MI₅ , les indices de fluidité mesurés selon la norme ASTM D 1238 (1986), à une température de 190 °C, sous une charge de 2,16 kg, respectivement 5 kg. Par ailleurs, on entend désigner par indice de fluidité HLMI, l'indice de fluidité mesuré selon la norme ASTM D 1238 (1986), à une température de 190 °C, sous une charge de 21,6 kg.

L'homopolymère (A) présente de préférence un MI₂ d'au moins 50, tout particulièrement d'au moins 90 g/10 min. Le MI₂ de l'homopolymère (A) ne dépasse de préférence pas 700 g/10 min. L'homopolymère (A) présente avantageusement un HLMI d'au moins 100 g/10 min.

L'homopolymère (A) présente avantageusement une viscosité intrinsèque ηA (mesurée dans le tétrahydronaphtalène à 160°C) d'au moins 0,50 dl/g, de préférence d'au moins 0,58 dl/g. Sa viscosité intrinsèque ne dépasse généralement pas 1,50 dl/g, de préférence, elle ne dépasse pas 1,00 dl/g. Particulièrement préféré est un homopolymère dont η_{A} ne dépasse pas 0,86 dl/g.

L'indice de fluidité MI₅ du copolymère (B) est de préférence d'au moins 0,015 g/10 min. Il ne dépasse de préférence pas 0,1 g/10 min. Le copolymère (B) présente avantageusement un HLMI d'au moins 0,1 g/10 min et qui, par ailleurs, ne dépasse pas 20 g/10 min.

Le copolymère (B) présente en général une viscosité intrinsèque η_{B} (mesurée dans le tétrahydronaphtalène à 160°C) d'au moins 2,20 dl/g. Sa viscosité intrinsèque η_{B} ne dépasse en général pas 6,30 dl/g, de préférence pas 5,90 dl/g. Particulièrement préféré est un copolymère (B) dont la viscosité intrinsèque ne dépasse pas 4,00 dl/g.

Par polymérisation en suspension, on entend désigner la polymérisation dans un diluant qui est à l'état de liquide dans les conditions de polymérisation (température, pression) utilisées, ces conditions de polymérisation ou le diluant étant tels qu'au moins 50 % en poids (de préférence au moins 70 %) du polymère formé soit insoluble dans ledit diluant.

Le diluant utilisé dans le procédé de polymérisation selon l'invention est habituellement un diluant hydrocarboné, inerte vis-à-vis du catalyseur, du cocatalyseur et du polymère formé, tel que par exemple un alcane linéaire ou ramifié ou un cycloalcane, ayant de 3 à 8 atomes de carbone. Le diluant ayant donné les meilleurs résultats est l'isobutane. Un avantage de l'utilisation de l'isobutane réside, notamment, dans son recyclage aisé. En effet, l'utilisation de l'isobutane permet de recycler le diluant récupéré à la fin du procédé selon l'invention dans le premier réacteur sans devoir procéder à des épurations poussées pour éliminer l'hexène résiduaire. En effet, du fait que les températures d'ébullition de l'isobutane et de l'hexène sont très éloignées, leur séparation peut être effectuée par distillation. ,

La quantité d'éthylène introduite dans le premier réacteur et dans le réacteur ultérieur de polymérisation est en général réglée de façon à obtenir une concentration d'éthylène dans le diluant de 5 à 50 g d'éthylène par kg de diluant.

La quantité d'hydrogène introduite dans le premier réacteur est en général réglée de façon à obtenir, dans le diluant, un rapport molaire entre l'hydrogène et l'éthylène de 0,05 à 1. Dans le premier réacteur, ce rapport molaire est de préférence d'au moins 0,1. Particulièrement préféré est un rapport molaire hydrogène/éthylène qui ne dépasse pas 0,6.

Le milieu soutiré du premier réacteur comprenant en outre l'homopolymère (A) est soumis à une détente de façon à éliminer (dégazer) au moins une partie de l'hydrogène. La détente est avantageusement effectuée à une température inférieure ou égale à la température de polymérisation dans le premier réacteur. La température à laquelle est effectuée la détente est habituellement supérieure à 20 °C, elle est de préférence d'au moins 40 °C. La pression à laquelle est effectuée la détente est inférieure à la pression dans le premier réacteur. La pression de détente est de préférence inférieure à 1,5 MPa. La pression de détente est habituellement d'au moins 0,1 MPa. La quantité d'hydrogène encore présente dans le milieu au moins partiellement dégazé est généralement inférieure à 1 % en poids de la quantité d'hydrogène initialement présente dans le milieu soutiré du premier réacteur de polymérisation, cette quantité est de préférence inférieure à 0,5 %. La quantité d'hydrogène présente dans le milieu partiellement dégazé introduit dans le réacteur de polymérisation ultérieur est dès lors faible, voire nulle. Le réacteur ultérieur est de préférence également alimenté en hydrogène. La quantité d'hydrogène introduite dans le réacteur ultérieur est en général réglée de façon à obtenir, dans le diluant, un rapport molaire entre l'hydrogène et l'éthylène de 0,001 à 0,1. Dans ce réacteur ultérieur, ce rapport molaire est de préférence d'au moins 0,004. Il ne dépasse de préférence pas 0,05. Dans le procédé selon l'invention, le rapport entre la concentration d'hydrogène dans le diluant dans le premier réacteur et celle dans le réacteur de polymérisation ultérieur est habituellement d'au moins 20, de préférence d'au moins 30. Particulièrement préféré est un rapport de concentrations d'au moins 40. Ce rapport n'excède habituellement pas 300, de préférence pas 200.

La quantité de 1-hexène introduite dans le réacteur de polymérisation ultérieur est telle que, dans ce réacteur, le rapport molaire hexène/éthylène dans le diluant est d'au moins 0,05, de préférence d'au moins 0,1. La quantité d'hexène introduite dans le réacteur ultérieur est telle que le rapport molaire hexène/éthylène ne dépasse pas 3, de préférence pas 2,8. Dans le procédé selon l'invention, le premier réacteur n'est pas alimenté en hexène. Il est essentiel que le premier réacteur soit essentiellement exempt de 1-hexène. Dès lors, le diluant introduit dans le premier réacteur, qui peut être du diluant recyclé, doit être très pauvre en hexène. Le diluant introduit dans le premier réacteur contient de préférence moins que 1000 ppm d'hexène. De manière particulièrement préférée, le diluant introduit dans le premier réacteur de polymérisation est essentiellement exempt d'hexène.

Le catalyseur utilisé dans le procédé selon l'invention comprend au moins un métal de transition. Par métal de transition, on entend désigner un métal des groupes 4, 5 ou 6 du Tableau Périodique des éléments (CRC Handbook of Chemistry and Physics, 75th edition, 1994-95). Le métal de transition est de préférence le titane et/ou le zirconium. Particulièrement préféré est le titane. Dans le procédé selon l'invention, on met de préférence en oeuvre un catalyseur comprenant, en outre le métal de transition, du magnésium. De bons résultats ont été obtenus avec des catalyseurs comprenant :
- de 10 à 30 %, de préférence de 15 à 20 %, en poids de métal de transition,
- de 0,5 à 20 %, de préférence de 1 à 10 %, en poids de magnésium,
- de 20 à 60 %, de préférence de 30 à 50 %, en poids d'halogène, tel que du chlore,
- de 0,1 à 10 %, de préférence de 0,5 à 5 %, en poids d'aluminium ;
le solde étant généralement constitué d'éléments provenant des produits utilisés pour leur fabrication tels que du carbone, de l'hydrogène et de l'oxygène. Ces catalyseurs sont de préférence obtenus par coprécipitation d'au moins un composé de métal de transition et d'un composé de magnésium au moyen d'un composé organoaluminique halogéné. De tels catalyseurs sont connus, ils ont notamment été décrits dans les brevets US 3901863, US 4292200 et US 4617360 (SOLVAY). Dans le procédé selon l'invention, le catalyseur est de préférence introduit uniquement dans le premier réacteur de polymérisation, c'est-à-dire qu'il n'y a pas d'introduction de catalyseur frais dans le réacteur ultérieur de polymérisation. La quantité de catalyseur introduite dans le premier réacteur est en général réglée de façon à obtenir une quantité d'au moins 0,5 mg de métal de transition par litre de diluant. La quantité de catalyseur ne dépasse habituellement pas 100 mg de métal de transition par litre de diluant.

Le cocatalyseur mis en oeuvre dans le procédé selon l'invention est de préférence un composé organoaluminique. Les composés organoaluminiques non halogénés de formule AlR₃ dans lesquels R représente un groupement alkyle ayant de 1 à 8 atomes de carbone, sont préférés. Particulièrement préférés sont le triéthylaluminium et le triisobutylaluminium. Le cocatalyseur est introduit dans le premier réacteur de polymérisation. On peut également introduire du cocatalyseur frais dans le réacteur ultérieur. La quantité de cocatalyseur introduite dans le premier réacteur est en général d'au moins 0,1x10⁻³ mole par litre de diluant. Elle ne dépasse habituellement pas 5x10⁻³ mole par litre de diluant. Le cas échéant, la quantité de cocatalyseur frais introduite dans le réacteur ultérieur ne dépasse habituellement pas 5x10⁻³ mole par litre de diluant.

La température de polymérisation est généralement de 20 à 130 °C. Elle est de préférence d'au moins 60 °C. De manière préférée, elle ne dépasse pas 115 °C. La pression totale à laquelle est effectué le procédé selon l'invention est en général de 0,1 MPa à 10 MPa. Dans le premier réacteur de polymérisation, la pression totale est de préférence d'au moins 2,5 MPa. De manière préférée, elle ne dépasse pas 5 MPa. Dans le réacteur ultérieur de polymérisation, la pression totale est de préférence d'au moins 1,3 MPa. De manière préférée, elle ne dépasse pas 4,3 MPa.

La durée de polymérisation dans le premier réacteur et dans le réacteur ultérieur est en général d'au moins 20 minutes, de préférence d'au moins 30 minutes. La durée de polymérisation ne dépasse habituellement pas 5 heures, de préférence pas 3 heures.

Pour effectuer le procédé selon l'invention, on peut mettre en oeuvre une installation comprenant plus de deux réacteurs de polymérisation connectés en série. On se limite de préférence à deux réacteurs de polymérisation connectés en série, séparés par un dispositif permettant d'effectuer la détente de pression.

Dans le procédé selon l'invention, on collecte à la sortie du réacteur de polymérisation ultérieur, une suspension comprenant une composition comprenant de 30 à 70 % en poids de l'homopolymère (A) et de 30 à 70 % en poids du copolymère (B). La composition de polymères d'éthylène peut être séparée de la suspension par tout moyen connu. Habituellement, la suspension est soumise à une détente de pression (détente finale) de façon à éliminer le diluant, l'éthylène, l'hexène et, éventuellement, l'hydrogène de la composition. Selon une variante du procédé selon l'invention et, plus particulièrement lorsque le diluant est l'isobutane, les gaz sortant de la première détente (détente intermédiaire entre les deux réacteurs de polymérisation) et de la détente finale sont mélangés, compressés et envoyés vers une unité de distillation. Cette unité de distillation se compose avantageusement d'une ou de deux colonnes de distillation en série. En tête de colonne, on soutire de l'éthylène et de l'hydrogène, en pied de colonne on soutire un mélange d'isobutane et d'hexène et d'un plateau intermédiaire, on soutire de l'isobutane exempt d'hexène. Le mélange isobutane-hexène est alors recyclé dans le réacteur ultérieur de polymérisation, alors que l'isobutane exempt d'hexène est recyclé dans le premier réacteur.

Le procédé selon l'invention permet d'obtenir, avec un bon rendement et avec une faible teneur en oligomères, une composition de polymères d'éthylène présentant un très bon compromis entre les propriétés mécaniques et les propriétés de mise en oeuvre. Une caractéristique essentielle de la composition fabriquée selon

l'invention est qu'elle est constituée d'un mélange intime et homogène de l'homopolymère (A) et du copolymère (B), le copolymère (B) étant préparé en présence de l'homopolymère (A). La composition est constituée de particules comprenant à la fois de l'homopolymère (A) et du copolymère (B).

La quantité d'homopolymère (A) dans la composition de polymères d'éthylène fabriquée selon l'invention est de préférence d'au moins 40 %, plus particulièrement d'au moins 42 % en poids par rapport au poids total de la composition. La quantité d'homopolymère (A) ne dépasse de préférence pas 60 % en poids. De bons résultats ont été obtenus avec une quantité d'homopolymère (A) ne dépassant pas 58 % en poids par rapport au poids total de la composition.

La quantité de copolymère (B) est de préférence d'au moins 40 %, plus particulièrement d'au moins 42 % en poids par rapport au poids total de la composition. La quantité de copolymère (B) ne dépasse de préférence pas 60 % en poids. De bons résultats ont été obtenus avec une quantité de copolymère (B) ne dépassant pas 58 % en poids par rapport au poids total de la composition.

La composition fabriquée selon l'invention comprend généralement au moins 95 %, de préférence au moins 99 % en poids de l'ensemble de l'homopolymère (A) et du copolymère (B). Tout particulièrement préférée est une composition constituée exclusivement de l'homopolymère (A) et du copolymère (B).

La composition fabriquée selon l'invention présente généralement un indice de fluidité MI₅ d'au moins 0,07 g/10 min, de préférence d'au moins 0,1 g/10 min. Le MI₅ de la composition ne dépasse habituellement pas 10 g/10 min, de préférence pas 7 g/10 min. Particulièrement préférées sont les compositions dont le MI₅ ne dépasse pas 1 g/10 min. La composition fabriquée selon l'invention présente avantageusement un HLMI d'au moins 2 g/10 min et qui, par ailleurs, ne dépasse pas 100 g/10 min.

Une caractéristique importante de la composition fabriquée selon l'invention est qu'elle présente une distribution large ou bimodale de poids moléculaire. Cette caractéristique est illustrée par le rapport des indices de fluidité mesurés sous des charges différentes et plus précisément par le rapport HLMI/MI₅. Les compositions présentent habituellement un rapport HLMI/MI₅ supérieur à 10, de préférence supérieur à 15. Le rapport HLMI/MI₅ ne dépasse habituellement pas 150. De manière préférée, le rapport HLMI/MI₅ ne dépasse pas 50. Dans les compositions fabriquées selon l'invention, le rapport entre la viscosité intrinsèque du copolymère (B) (η_{B}) et celle de l'homopolymère (A) (η_{A}) est généralement d'au moins 1,5, de préférence d'au moins 2. Le rapport η_{B}/η_{A} ne dépasse généralement pas 12, de préférence pas 10. Particulièrement préféré est un rapport qui ne dépasse pas 7.

En outre, la composition fabriquée selon l'invention présente habituellement une viscosité dynamique µ2 mesurée à 190 °C à un gradient de vitesse de 100 s⁻¹, de 10 à 30000 dPa.s. Dans le cadre de la présente invention, la viscosité dynamique µ2 est déterminée par extrusion du polymère à 190°C, au travers d'une filière d'une longueur de 15 mm et d'un diamètre de 1 mm, à une vitesse constante correspondant à un gradient de vitesse de 100 s⁻¹ et en mesurant la force transmise par le piston pendant sa descente. La viscosité dynamique µ2 est alors calculée par la relation µ2 = 233 x Fp , dans laquelle Fp représente la force moyenne exercée par le piston pendant la durée de mesure de 30 secondes exprimée en daN. Le cylindre et le piston du rhéomètre utilisés pour cette mesure répondent aux critères de celui utilisé pour la mesure de l'indice de fluidité selon la norme ASTM D 1238 (1986).

Les compositions fabriquées selon l'invention présentent généralement une masse volumique standard MVS mesurée selon la norme ASTM D 792 (sur un échantillon préparé selon la norme ASTM D 1928 Procédure C), d'au moins 930 kg/m³. Les compositions présentent de préférence une MVS supérieure à 935 kg/m³. Des compositions ayant donné de bons résultats sont celles dont la MVS est au moins égale à 940 kg/m³. Le plus souvent la MVS ne dépasse pas 965 kg/m³, de préférence elle ne dépasse pas 960 kg/m³. Particulièrement préférées sont les compositions dont la MVS est inférieure à 955 kg/m³. La MVS de l'homopolymère (A) présent dans les compositions fabriquées selon l'invention est généralement d'au moins 970 kg/m³. La MVS du copolymère (B) est généralement de 910 à 940 kg/m³. La MVS du copolymère (B) est de préférence d'au moins 915 kg/m³. La MVS du copolymère (B) ne dépasse de préférence pas 938 kg/m³, plus particulièrement pas 935 kg/m³.

Les compositions fabriquées selon l'invention conviennent pour être mises en oeuvre selon les procédés classiques de façonnage d'articles et plus particulièrement selon les procédés d'extrusion et d'extrusion-soufflage.

Les compositions fabriquées selon l'invention conviennent bien pour la fabrication de films. Les compositions fabriquées selon l'invention sont utiles pour la fabrication de films, en particulier par extrusion-soufflage. Les compositions fabriquées selon l'invention permettent d'obtenir des films présentant à la fois un bel aspect de surface (absence de défauts appelés "Shark Skin") et une bonne résistance à la déchirure et à la perforation.

Les compositions fabriquées selon l'invention conviennent particulièrement bien pour l'extrusion de tuyaux, notamment de tuyaux pour le transport de fluides sous pression, tel que l'eau et le gaz. La fabrication de tuyaux par extrusion d'une composition fabriquée selon l'invention s'effectue avantageusement sur une chaîne d'extrusion comprenant une extrudeuse, un calibreur et un dispositif de tirage. L'extrusion est généralement réalisée sur une extrudeuse du type monovis et à une température de 150 à 230 °C. Le calibrage des tuyaux peut être effectué par la création d'une dépression à l'extérieur du tuyau et/ou par la création d'une surpression à l'intérieur du tuyau.

Les tuyaux fabriqués au moyen des compositions fabriquées selon l'invention se caractérisent par :
- une bonne résistance à la propagation lente de fissures (ESCR), traduite par un temps à la rupture généralement supérieur à 2000 heures, tel que mesuré, à 80 °C, sur un tube entaillé ayant un diamètre de 110 mm et une épaisseur de 10 mm et sous une contrainte de 4,6 MPa selon la méthode décrite dans la norme ISO F/DIS 13479 (1996),
- une bonne résistance à la propagation rapide de fissures (RCP), traduite par un arrêt de la propagation de fissure à une pression interne généralement au moins égale à 12 bar, tel que mesuré, à 0 °C, sur un tube d'un diamètre de 110 mm et d'une épaisseur de 10 mm selon la méthode S4 décrite dans la norme ISO F/DIS 13477(1996), et
- une bonne résistance au fluage (τ), traduite par un temps à la rupture généralement supérieur à 200 heures (mesuré, à 20 °C, sur un tube ayant un diamètre de 50 mm et une épaisseur de 3 mm sous une contrainte circonférentielle de 12,4 MPa selon la norme ISO 1167).

Les tuyaux fabriqués au moyen des compositions fabriquées selon l'invention se caractérisent en particulier par un meilleur compromis entre la résistance à la propagation de fissures (propagation lente et propagation rapide de fissures) et la résistance au fluage par rapport aux compositions connues de l'art antérieur.

Il va de soi, que lorsqu'elles sont utilisées pour le façonnage en fondu d'articles, les compositions fabriquées selon l'invention peuvent être mélangées avec les additifs de mise en oeuvre usuels des polyoléfines, tels que des stabilisants (des agents antioxydants et/ou anti-UV), des agents antistatiques et des agents de mise en oeuvre ("processing aid") ainsi que des pigments. Particulièrement préférés sont les mélanges comprenant au moins 95 %, de préférence au moins 97 %, en poids d'une composition fabriquée selon l'invention et au moins un des additifs décrits ci-dessus.

Les exemples qui suivent sont destinés à illustrer l'invention.

La signification des symboles utilisés dans ces exemples et les unités exprimant les grandeurs mentionnées et les méthodes de mesures de ces grandeurs sont explicitées ci-dessous.
- Q =: teneur en comonomère du copolymère (B), exprimée en % en poids. Dans le cas de l'hexène, la teneur a été mesurée comme décrit ci-dessus; dans le cas du butène, la teneur en butène a été également mesurée par RMN selon la méthode décrite ci-dessus, mais en utilisant les raies caractéristiques du butène (11,18 et 39,6 ppm).
- QT =: teneur en comonomère de la composition, exprimée en % en poids. Cette teneur est mesurée comme expliquée ci-dessus pour la teneur en comonomère du copolymère (B).
- Elmendorf =: résistance à la déchirure mesurée selon la norme ASTM D1922-67; L désigne la mesure dans le sens longitudinal du film, T désigne la mesure dans le sens transversal du film.
- DDT =: résistance à la perforation mesurée selon la norme ISO 7765-1 (Dart Drop Test). Les valeurs ont été exprimées en g par épaisseur du film en µm.

Les autres symboles ont été explicités dans la description.

Les valeurs marquées * ont été calculées à partir des valeurs mesurées pour le polymère fabriqué dans le réacteur 1 et pour la composition issue du réacteur 2.

### Exemples comparatifs 1R, 2R, 4R et 7R (non conformes à l'invention)

### a) Préparation du catalyseur

On a fait réagir pendant 4 heures à 150 °C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium pendant 90 minutes à 45 °C. Le catalyseur ainsi obtenu, recueilli de la suspension, comprenait (% en poids) :
Ti : 17; Cl : 41; Al : 2; Mg : 5.

### b) Préparation de la composition

On a fabriqué une composition de polymères d'éthylène en suspension dans l'isobutane dans deux réacteurs boucles connectés en série, séparés par un dispositif permettant d'effectuer en continu la détente de pression.

Dans le premier réacteur boucle, on a introduit en continu l'isobutane, l'éthylène, l'hydrogène, du triéthylaluminium et le catalyseur décrit au point a) et dans ce milieu, on a effectué la polymérisation de l'éthylène pour former l'homopolymère (A). On a soutiré, en continu, dudit réacteur ledit milieu comprenant en outre l'homopolymère (A), et on l'a soumis à une détente (60 °C, 0,7 MPa) de façon à éliminer au moins une partie de l'hydrogène. Le milieu au moins partiellement dégazé en hydrogène résultant a alors été introduit en continu dans un deuxième réacteur de polymérisation, en même temps que de l'éthylène, de l'hexène, de l'isobutane et de l'hydrogène et on y a effectué la polymérisation de l'éthylène et de l'hexène pour former le copolymère (B). On a soutiré en continu du deuxième réacteur la suspension comprenant la composition de polymères d'éthylène et on a soumis cette suspension à une détente finale de façon à évaporer l'isobutane et les réactifs présents (éthylène, hexène et hydrogène) et de récupérer la composition sous la forme d'une poudre qui a été soumise à un séchage pour achever le dégazage de l'isobutane. Les autres conditions de polymérisation sont spécifiées dans le tableau 1.

Les propriétés des compositions finales sont présentées dans le tableau 2.

### c) Utilisation de la composition pour la préparation de films

Les compositions des différents exemples ont été utilisées pour la fabrication de films par extrusion-soufflage à travers une filière d'un diamètre de 100 mm, à un taux de gonflement (rapport entre le diamètre de la bulle et le diamètre de la filière d'extrusion) fixé à 4 et une hauteur de col de 6 fois le diamètre de la filière d'extrusion. Les propriétés mécaniques des films obtenus sont présentées dans le tableau 2.

### Exemple comparatif 3R

On a fabriqué une composition de polymères d'éthylène dans l'installation et avec le catalyseur et le cocatalyseur décrits à l'exemple 1R mais en utilisant de l'hexane comme diluant et du butène comme comonomère dans le deuxième réacteur. Les autres conditions sont spécifiées dans le tableau 1.

Les propriétés de la composition obtenue sont présentées dans le tableau 2.

Des films ont été fabriqués avec cette composition non conforme à l'invention dans les mêmes conditions que pour les exemples 1R, 2R, 4R et 7R. Les propriétés mécaniques des films obtenus sont également présentées dans le tableau 2.

### Exemples comparatifs 5R et 6R

On a fabriqué une composition de polymères d'éthylène dans l'installation et avec le catalyseur et le cocatalyseur décrits à l'exemple 1R mais en utilisant de l'hexène comme comonomère dans les deux réacteurs de polymérisation. Les autres conditions sont spécifiées dans le tableau 1.

Les propriétés des compositions obtenues sont présentées dans le tableau 2.

Des films ont été fabriqués avec ces compositions non conformes à l'invention dans les mêmes conditions que pour les exemples 1R, 2R, 4R et 7R. Les propriétés mécaniques des films obtenus sont également présentées dans le tableau 2.

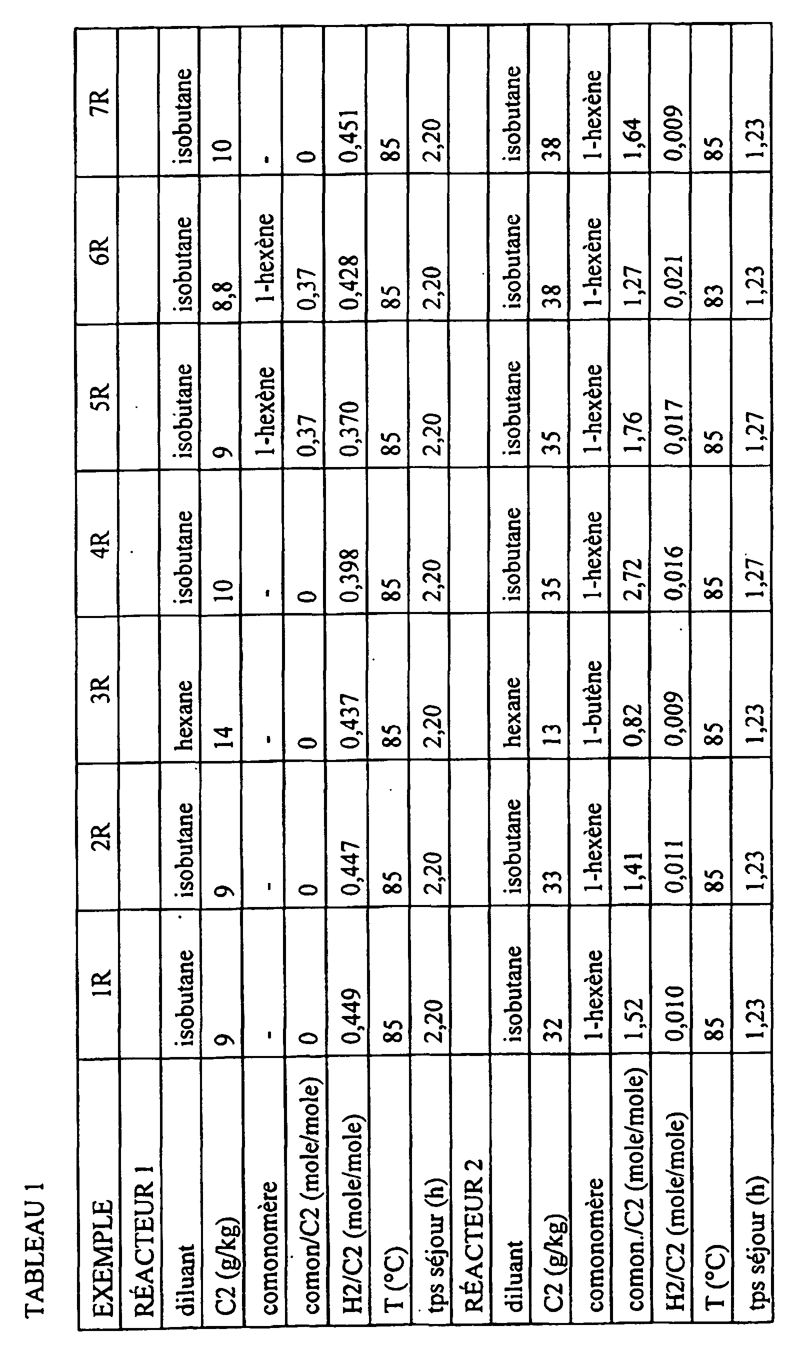

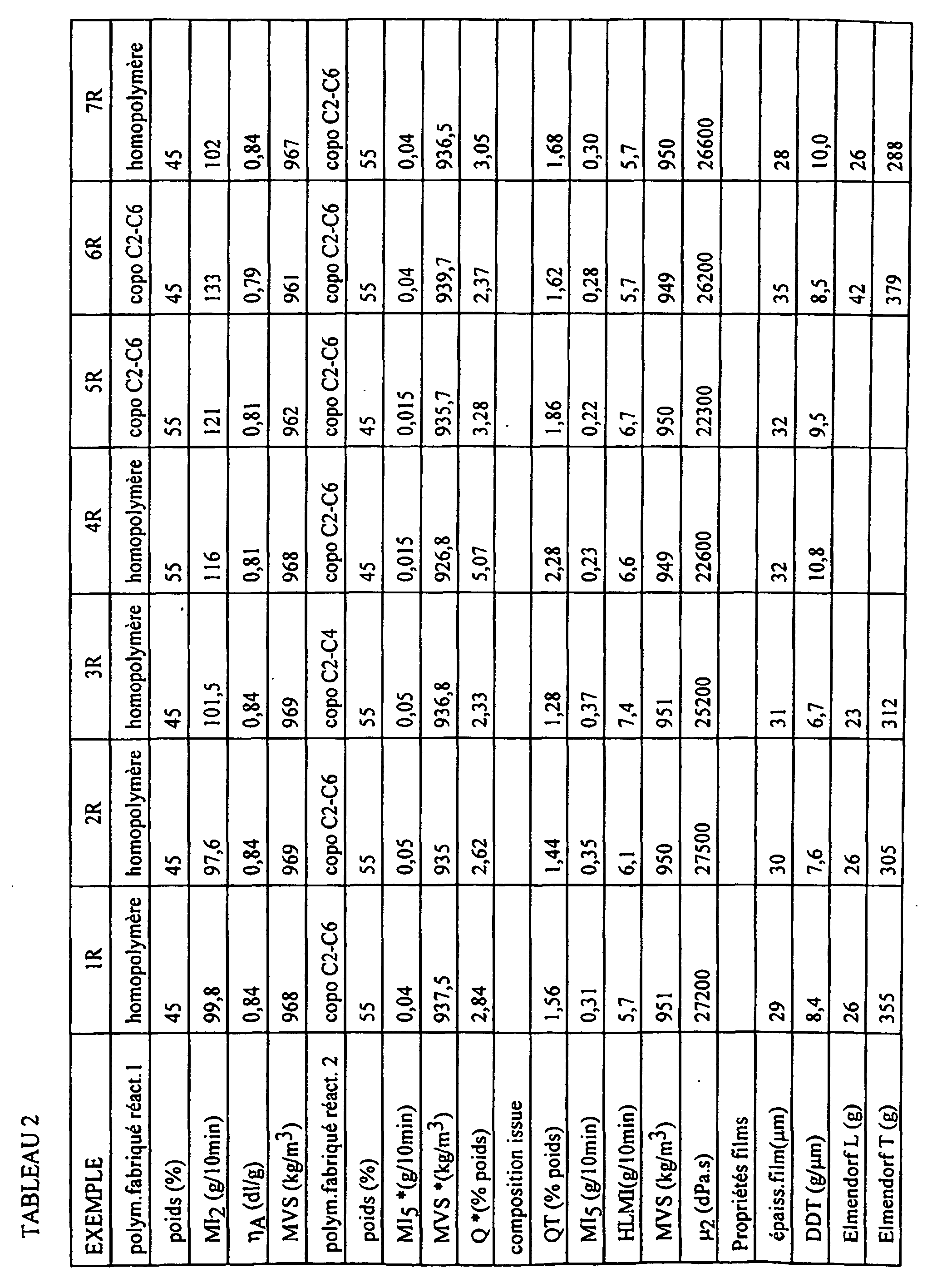

Le tableau 2 montre que les compositions comprenant un homopolymère et un copolymère éthylène/hexène présentent des meilleures propriétés mécaniques (résistance à la déchirure et résistance à la perforation) par rapport à une composition comprenant du butène à la place de l'hexène (ex. 1R et 2R par rapport à l'ex. 3R) et par rapport à des compositions comprenant deux copolymères à l'hexène (ex. 4R par rapport à l'ex. 5R et ex. 7R par rapport à l'ex. 6R).

### Exemples 8 selon l'invention et 9R

Ces exemples ont été effectués dans l'installation et avec le catalyseur et le cocatalyseur décrits dans l'exemple 1. Les conditions de polymérisation dans les deux réacteurs sont résumées dans le tableau 3.

**TABLEAU 3**

| EXEMPLE | 8 | 9R |
|---|---|---|
| diluant | isobutane | hexane |
| RÉACTEUR 1 | | |
| C2 (g/kg) | 14,9 | 10,7 |
| H2/C2 | 0,46 | 0,38 |
| T (°C) | 85 | 85 |
| tps séjour (h) | 2,3 | 3,1 |

| RÉACTEUR 2 | | |
|---|---|---|
| C2 (g/kg) | 21,9 | 14,9 |

| comonomère | hexène | butène |
|---|---|---|
| comonom./C2 | 1,61 | 0,89 |
| H2/C2 | 0,0048 | 0,0033 |
| T (°C) | 75 | 75 |
| tps séjour (h) | 1,3 | 1,93 |

Les propriétés des compositions finales sont résumées dans le tableau 4. 997 parts de la composition obtenue ont été mélangées avec 2 parts d'un agent antioxydant et 1 part d'un agent anti-UV et le mélange a été granulé par extrusion dans une extrudeuse à une température de 230 °C.

Puis des tuyaux ont été fabriqués par extrusion de ces granules sur une extrudeuse de type monovis à 200 °C. Les propriétés mesurées sur ces tuyaux sont reprises dans le tableau 4. Il apparaît que la composition comprenant un copolymère éthylène-hexène (ex.8) présente un meilleur compromis entre la résistance à la propagation de fissures (résistance à la propagation lente de fissures et résistance à la propagation rapide de fissures) et la résistance au fluage par rapport à une composition comprenant un copolymère éthylène-butène (ex.9R).

**TABLEAU 4**

| EXEMPLE | 8 | 9R |
|---|---|---|
| Polymère fabriqué au réacteur 1 | homo | homo |
| poids (%) | 50,2 | 50,8 |
| MI₂ (g/10min) | 575 | 468 |
| η_{A} (dl/g) | 0,59 | 0,62 |
| MVS (kg/m³) | 973 | 972 |

| Polymère fabriqué au réacteur 2 | copo C2-C6 | copo C2-C4 |
|---|---|---|
| poids (%) | 49,8 | 49,2 |
| MI₅ *(g/10min) | 0,03 | 0,025 |
| MVS *(kg/m³) | 927,1 | 925,8 |
| Q *(% poids) | 3 | 2,5 |

| Composition issue du réact. 2 | | |
|---|---|---|
| QT (% poids) | 1,5 | 1,24 |
| MI₅ (g/10min) | 0,31 | 0,31 |
| MVS (kg/m³) | 949,6 | 948,7 |
| µ2 (dPa.s) | 22100 | 20500 |
| ESCR (h) | >7224 | 7344 |
| RCP (bar) à 0°C | >12 | >12 |
| à - 15°C | >12 | >12 |
| τ (h) | 1780 | 235 |

### Exemple 10 selon l'invention

Cet exemple a été effectué dans l'installation de l'exemple IR, avec un catalyseur comprenant, en % en poids, Ti : 5 ; Zr : 18 ; Cl : 45 ; Al : 5 ; Mg : 6 et du triisobutylaluminium comme cocatalyseur. Les conditions de polymérisation dans les deux réacteurs sont résumées dans le tableau 5.

**TABLEAU 5**

| EXEMPLE | 10 |
|---|---|
| diluant | Isobutane |
| REACTEUR 1 | |
| C2 (g/kg) | 25,2 |
| H2/C2 | 0,47 |
| T (°C) | 85 |
| tps séjour (h) | 3,29 |

| REACTEUR 2 | |
|---|---|
| C2 (g/kg) | 29,8 |

| comonomère | Hexène |
|---|---|
| comonom./C2 | 1,32 |
| H2/C2 | 0,0048 |
| T (°C) | 75 |
| tps séjour (h) | 1,86 |

Les propriétés des compositions finales sont résumées dans le tableau 6.

997 parts de la composition obtenue ont été mélangées avec 2 parts d'un agent antioxydant et 1 part d'un agent anti-UV et le mélange a été granulé par extrusion dans une extrudeuse à une température de 230 °C.

Puis des tuyaux ont été fabriqués par extrusion de ces granules sur une extrudeuse de type monovis à 200 °C. Les propriétés mesurées sur ces tuyaux sont reprises dans le tableau 6.

**TABLEAU 6**

| EXEMPLE | 10 |
|---|---|
| Polymère fabriqué au réacteur 1 | Homo |
| poids (%) | 53,4 |
| MI₂ (g/10min) | 400 |
| MVS (kg/m³) | 971,8 |

| Polymère fabriqué au réacteur 2 | Copo C₂-C₆ |
|---|---|
| poids (%) | 46,6 |
| MI₅ *(g/10min) | 0,04 |
| MVS *(kg/m³) | 923,5 |
| Q *(% poids) | 3 |

| Composition issue du réact. 2 | |
|---|---|
| QT (% poids) | 1,4 |
| MI₅ (g/10min) | 0,54 |
| MVS (kg/m³) | 948,7 |
| µ₂ (dPa.s) | 19000 |
| ESCR (h) | >3600 |

## Revendications

1. Procédé de fabrication d'une composition de polymères d'éthylène, comprenant de 30 à 70 % en poids par rapport au poids total de la composition d'un homopolymère de l'éthylène (A) ayant un indice de fluidité MI₂ de 5 à 1000 g/10 min et une masse volumique standard MVS d'au moins 970 kg/m³ et de 30 à 70 % en poids par rapport au poids total de la composition d'un copolymère de l'éthylène et de l'hexène (B) ayant un indice de fluidité MI₅ de 0,01 à 2 g/10 min et une masse volumique standard MVS de 910 à 940 kg/m³, dans au moins deux réacteurs de polymérisation connectés en série, selon lequel :
- dans un premier réacteur, on polymérise de l'éthylène en suspension dans un milieu comprenant un diluant, de l'hydrogène, un catalyseur à base d'un métal de transition et un cocatalyseur, de façon à former de 30 à 70 % en poids par rapport au poids total de la composition de l'homopolymère de l'éthylène (A),
- on soutire dudit réacteur ledit milieu comprenant en outre l'homopolymère (A) et on le soumet à une détente de façon à dégazer au moins une partie de l'hydrogène, puis,
- on introduit dans un réacteur ultérieur ledit milieu au moins partiellement dégazé comprenant l'homopolymère (A) ainsi que de l'éthylène et du 1-hexène et, éventuellement, au moins une autre α-oléfine et on y effectue la polymérisation en suspension pour former de 30 à 70 % en poids par rapport au poids total de la composition du copolymère de l'éthylène et de l'hexène (B).

2. Procédé selon la revendication 1, **caractérisé en ce que** la teneur en hexène du copolymère (B) est d'au moins 0,4 % et d'au plus 10 % en poids.

3. Procédé selon la revendication 1 ou 2, **caractérisé en ce que** le copolymère (B) est constitué essentiellement d'unités monomériques dérivées de l'éthylène et du 1-hexène.

4. Procédé selon l'une quelconque des revendications 1 à 3, **caractérisé en ce que** l'homopolymère (A) présente un MI₂ d'au moins 50 et ne dépassant pas 700 g/10 min et **en ce que** le copolymère (B) présente un MI₅ d'au moins 0,015 et ne dépassant pas 0,1 g/10 min.

5. Procédé selon l'une quelconque des revendications 1 à 4, **caractérisé en ce que** le diluant est l'isobutane.

6. Procédé selon l'une quelconque des revendications 1 à 5, **caractérisé en ce que** la quantité d'hydrogène introduite dans le premier réacteur est réglée de façon à obtenir, dans le diluant, un rapport molaire entre l'hydrogène et l'éthylène de 0,05 à 1.

7. Procédé selon l'une quelconque des revendications 1 à 6, **caractérisé en ce que** le rapport entre la concentration d'hydrogène dans le premier réacteur et celle dans le réacteur de polymérisation ultérieur est d'au moins 20.

8. Procédé selon l'une quelconque des revendications 1 à 7, **caractérisé en ce que** la quantité de 1-hexène introduite dans le réacteur de polymérisation ultérieur est telle que, dans ce réacteur, le rapport molaire hexène/éthylène dans le diluant est de 0,05 à 3.

9. Procédé selon l'une quelconque des revendications 1 à 8, **caractérisé en ce que** le catalyseur comprend de 10 à 30 % en poids de métal de transition, de 0,5 à 20 % en poids de magnésium, de 20 à 60 % en poids d'un halogène et de 0,1 à 10 % en poids d'aluminium.

## Patentansprüche

1. Verfahren zur Herstellung einer Zusammensetzung von Ethylenpolymeren, die 30 bis 70 Gewichtsprozent, bezüglich des Gesamtgewichts der Zusammensetzung, eines Homopolymers von Ethylen (A) mit einem Fließindex MI₂ von 5 bis 1000 g/10 min und einer Standarddichte MVS von mindestens 970 kg/m³ und 30 bis 70 Gewichtsprozent, bezüglich des Gesamtgewichts der Zusammensetzung, eines Copolymers von Ethylen und Hexen (B) mit einem Fließindex MI₅ von 0,01 bis 2 g/10 min und einer Standarddichte MVS von 910 bis 940 kg/m³ umfasst, in mindestens zwei in Reihe verbundenen Polymerisationsreaktoren, gemäß welchem:
- man in einem ersten Reaktor Ethylen in Suspension in einem Medium polymerisiert, das ein Verdünnungsmittel, Wasserstoff, einen Katalysator auf der Basis eines Übergangsmetalls und einen Cokatalysator umfasst, um 30 bis 70 Gewichtsprozent, bezüglich des Gesamtgewichts der Zusammensetzung, des Homopolymers von Ethylen (A) zu bilden,
- man aus dem Reaktor das Medium entnimmt, das außerdem das Homopolymer (A) umfasst, und man es einer Entspannung unterzieht, um zumindest einen Teil des Wasserstoffs zu entgasen, dann
- man in einen nachfolgenden Reaktor das zumindest teilweise entgaste Medium, das das Homopolymer (A) umfasst, sowie Ethylen und 1-Hexen und gegebenenfalls mindestens ein weiteres α-Olefin, einführt und man dort die Polymerisation in Suspension ausführt, um 30 bis 70 Gewichtsprozent, bezüglich des Gesamtgewichts der Zusammensetzung, des Copolymers von Ethylen und Hexen (B) zu bilden.

2. Verfahren nach Anspruch 1, **dadurch gekennzeichnet, dass** der Hexengehalt des Copolymers (B) mindestens 0,4% und höchstens 10 Gewichtsprozent ist.

3. Verfahren nach Anspruch 1 oder 2, **dadurch gekennzeichnet, dass** das Copolymer (B) im Wesentlichen aus von Ethylen und 1-Hexen abgeleiteten monomeren Einheiten besteht.

4. Verfahren nach einem der Ansprüche 1 bis 3, **dadurch gekennzeichnet, dass** das Homopolymer (A) einen MI₂ von mindestens 50 und 700 g/10 min nicht übersteigend aufweist und dass das Copolymer (B) einen MI₅ von mindestens 0,015 und 0,1 g/10 min nicht übersteigend aufweist.

5. Verfahren nach einem der Ansprüche 1 bis 4, **dadurch gekennzeichnet, dass** das Verdünnungsmittel Isobutan ist.

6. Verfahren nach einem der Ansprüche 1 bis 5, **dadurch gekennzeichnet, dass** die Menge an Wasserstoff, die in den ersten Reaktor eingeführt wird, so geregelt wird, dass im Verdünnungsmittel ein Molverhältnis zwischen dem Wasserstoff und dem Ethylen von 0,05 bis 1 erhalten wird.

7. Verfahren nach einem der Ansprüche 1 bis 6, **dadurch gekennzeichnet, dass** das Verhältnis zwischen der Wasserstoffkonzentration im ersten Reaktor und jener im nachfolgenden Polymerisationsreaktor mindestens 20 ist.

8. Verfahren nach einem der Ansprüche 1 bis 7, **dadurch gekennzeichnet, dass** die Menge an 1-Hexen, die in den nachfolgenden Polymerisationsreaktor eingeführt wird, derart ist, dass in diesem Reaktor das Molverhältnis Hexen/Ethylen im Verdünnungsmittel 0,05 bis 3 ist.

9. Verfahren nach einem der Ansprüche 1 bis 8, **dadurch gekennzeichnet, dass** der Katalysator 10 bis 30 Gewichtsprozent Übergangsmetall, 0,5 bis 20 Gewichtsprozent Magnesium, 20 bis 60 Gewichtsprozent eines Halogens und 0,1 bis 10 Gewichtsprozent Aluminium umfasst.

## Claims

1. Process for manufacturing an ethylene polymer composition comprising from 30 to 70% by weight, relative to the total weight of the composition, of an ethylene homopolymer (A) having a melt flow index MFI₂ of 5 to 1000 g/10 min and a standard density (SD) of at least 970 kg/m³ and 30 to 70% by weight, relative to the total weight of the composition, of an ethylene/hexene copolymer (B) having a melt flow index MFI₅ of 0.01 to 2 g/10 min and a standard density SD of 910 to 940 kg/m³, in at least two polymerization reactors connected in series, in which process:
- ethylene is polymerized in suspension, in a first reactor, in a mixture comprising a diluent, hydrogen, a catalyst based on a transition metal and a cocatalyst so as to form 30 to 70% by weight, relative to the total weight of the composition, of the ethylene homopolymer (A);
- the said mixture, which furthermore includes the homopolymer (A), is withdrawn from the said reactor and subjected to an expansion step so as to vent at least some of the hydrogen; and
- the said at least partly degassed mixture comprising the homopolymer (A), ethylene, 1-hexene and, optionally, at least one other α-olefin, is introduced into a subsequent reactor and the suspension polymerization is carried out therein in order to form 30 to 70% by weight, relative to the total weight of the composition, of the ethylene/hexene copolymer (B).

2. Process according to Claim 1, **characterized in that** the hexene content of the copolymer (B) is at least 0.4% and at most 10% by weight.

3. Process according to Claim 1 or 2, **characterized in that** the copolymer (B) essentially consists of monomeric units derived from ethylene and 1-hexene.

4. Process according to any one of Claims 1 to 3, **characterized in that** the homopolymer (A) has an MFI₂ of at least 50 but not exceeding 700 g/10 min and **in that** the copolymer (B) has an MFI₅ of at least 0.015 but not exceeding 0.1 g/10 min.

5. Process according to any one of Claims 1 to 4, **characterized in that** the diluent is isobutane.

6. Process according to any one of Claims 1 to 5, **characterized in that** the amount of hydrogen introduced into the first reactor is regulated so as to obtain a hydrogen/ethylene molar ratio in the diluent of from 0.05 to 1.

7. Process according to any one of Claims 1 to 6, **characterized in that** the ratio of the hydrogen concentration in the first reactor to that in the subsequent polymerization reactor is at least 20.

8. Process according to any one of Claims 1 to 7, **characterized in that** the amount of 1-hexene introduced into the subsequent polymerization reactor is such that, **in that** reactor, the hexene/ethylene molar ratio in the diluent is from 0.05 to 3.

9. Process according to any one of Claims 1 to 8, **characterized in that** the catalyst comprises from 10 to 30% by weight of a transition metal, from 0.5 to 20% by weight of magnesium, from 20 to 60% by weight of a halogen and from 0.1 to 10% by weight of aluminium.
